# EUROPÄISCHE PATENTSCHRIFT

(11) **EP 0 868 774 B1**
(45) Veröffentlichungstag und Bekanntmachung des Hinweises auf die Patenterteilung: **16.05.2001**
(21) Anmeldenummer: 96942329.2
(22) Anmeldetag: 04.12.1996
(51) Int. Cl.: H02K 41/02

(54) **ELEKTRISCHER SYNCHRON-LINEARMOTOR UND VERFAHREN ZUR ERMITTLUNG DES KOMMUTIERUNGSOFFSETS EINES LINEARANTRIEBS MIT EINEM SOLCHEN ELEKTRISCHEN SYNCHRON-LINEARMOTOR**
ELECTRICAL SYNCHRONOUS LINEAR MOTOR AND METHOD FOR DETERMINING THE COMMUTATION OFFSET OF A LINEAR DRIVE WITH SAID ELECTRICAL SYNCHRONOUS LINEAR MOTOR
MOTEUR LINEAIRE SYNCHRONE ELECTRIQUE ET PROCEDE DE DETERMINATION DU DECALAGE DE COMMUTATION D'UN DISPOSITIF D'ENTRAINEMENT LINEAIRE POURVU D'UN TEL MOTEUR LINEAIRE

(30) Priorität: 20.12.1995 DE 19547686
(43) Veröffentlichungstag der Anmeldung: 07.10.1998
(73) Patentinhaber: Indramat GmbH, 97816 Lohr (DE)
(72) Erfinder: PHILIPP, Werner, D-97816 Lohr (DE); SCHEMM, Eberhard, D-97816 Lohr (DE); SCHNURR, Bernd, D-97816 Lohr (DE)
(86) Internationale Anmeldenummer: EP9605396
(87) Internationale Veröffentlichungsnummer: WO9723028

(56) Entgegenhaltungen:
- SU-A- 1 486 794
- US-A- 5 289 088
- US-A- 5 359 245
- US-A- 5 461 311
- US-A- 5 536 983
- PATENT ABSTRACTS OF JAPAN vol. 012, no. 254 (E-634), 16.Juli 1988 & JP 63 039454 A (HITACHI KIDEN KOGYO LTD), 19.Februar 1988,
- PATENT ABSTRACTS OF JAPAN vol. 010, no. 095 (E-395), 12.April 1986 & JP 60 237855 A (NIPPON DENKI KK), 26.November 1985,
- MACHINE DESIGN INTERNATIONAL, 12 SEPT. 1994, USA, Bd. 66, Nr. 17, ISSN 0024-9114, Seiten 60-64, XP000468049 LAMMERS M G M: "Linears lead in ultrasmooth motion (linear servomotors)"

## Beschreibung

Die Erfindung betrifft gemäß Anspruch 1 zunächst einen elektrischen Synchron-Linearmotor mit einem Sekundärteil, das mehrere in einem bestimmten Polraster angeordnete Permanentmagnete aufweist, und mit einem Primärteil, das relativ zum Sekundärteil verfahrbar ist und dessen Position relativ zum Sekundärteil durch ein Wegmeßsystem erfaßbar ist. Derartige Vorrichtungen sind aus den Dokumenten US-A-5 359 245 und US-A-5 289 088 bekannt.

Gemäß Anspruch 13 betrifft die Erfindung außerdem ein Verfahren zur Ermittlung des Kommutierungsoffsets bei einem elektrischen Synchron-Linearmotor.

Um eine zeitlich konstante Kraft des Synchron-Linearmotors zu gewährleisten, muß zwischen dem Feldvektor des Primärteils und dem Feldvektor des Sekundärteils ein Winkel von 90° eingestellt werden. Dies bedeutet, daß die Motoransteuerung des Primärteils in Abhängigkeit zur aktuellen Position der Lage der Permanentmagnetpole des Sekundärteils zu erfolgen hat. Daher benötigt die Motoransteuerung jeweils aktuelle Positionsistwerte des Primärteils bzgl. des Sekundärteils. Hierfür ist ein Wegmeßsystem vorhanden, welches diese Informationen für die Motoransteuerung liefert.

Bei Synchronmotoren allgemein besteht nach der mechanischen Montage zunächst kein eindeutiger Zusammenhang zwischen den Feldvektoren von Primär- und Sekundärteil. Dieser Zusammenhang wird bei der Erstinbetriebnahme des Antriebs durch die Ermittlung des sogenannten Kommutierungsoffsets eindeutig hergestellt.

Ziel der Erfindung ist es, einen elektrischen Synchron-Linearmotor so zu gestalten, daß er bei kostengünstiger Herstellung und sicherer Funktion auf einfache Weise in Betrieb genommen werden kann. Desweiteren soll eine hohe Montagesicherheit gewährleistet sein. Außerdem ist ein einfaches Verfahren zur Inbetriebnahme anzugeben.

Eine einfache Inbetriebnahme ist mit einem elektrischen Synchron-Linearmotor möglich, der alle Merkmale aus dem Anspruch 1 aufweist. Bei einem solchen elektrischen Synchron-Linearmotor befindet sich also am Sekundärteil eine mechanische Markierung mit einem bekannten Bezug zum Polraster der Permanentmagnete. Mit einer solchen Markierung läßt sich die Position des Primärteils bezüglich der Permanentmagnete des Sekundärteils und damit der Kommutierungsoffset bestimmen. Nachdem eine Beziehung zwischen dem Kommutierungsoffset und der augenblicklich vom Wegmeßsystem erfaßten Position des Primärteils hergestellt ist, kann die Motorsteuerung die Wicklungen des Primärteils jeweils so ansteuern, daß zwischen den Feldvektoren von Primär- und Sekundärteil ein Winkel von 90° eingestellt ist.

Besonders günstig zur Ermittlung des Kommutierungsoffsets ist ein Verfahren gemäß Anspruch 13, gemäß dem der Kommutierungsoffset aus dem ermittelten Abstand zwischen der mechanischen Markierung am Sekundärteil und dem Primärteil sowie der Lage der Markierung zum Polraster intern im Motorsteuergerät errechnet wird.

Vorteilhafte Ausgestaltungen eines elektrischen Synchron-Linearmotors kann man den Unteransprüchen 2 bis 12 entnehmen.

Bevorzugt ist gemäß Anspruch 2 der Bezug der mechanischen Markierung zum Polraster der Permanentmagnete in einem elektrischen Motorsteuergerät nichtflüchtig gespeichert.

Als Wegmeßsystem wird gemäß Anspruch 3 vorteilhafterweise ein Absolutwegmeßsystem verwendet. Der Kommutierungsoffset muß dann nicht nach jedem Ausschalten des Motorsteuergeräts neu ermittelt werden, sondern nur noch dann, wenn Veränderungen am Wegmeßsystem vorgenommen werden oder wenn ein mechanischer Umbau mit veränderten Befestigungsbedingungen von Primär- oder Sekundärteil erfolgt ist.

Am Sekundärteil des elektrischen Synchron-Linearmotors sind üblicherweise Befestigungsbohrungen vorhanden, die zur Befestigung des Sekundärteils am Maschinenbett dienen. Günstig ist es nun, wenn gemäß Anspruch 4 als mechanische Markierung direkt oder indirekt eine Befestigungsbohrung des Sekundärteils verwendet wird.

Es können auch mehrere mechanische Markierungen mit der gleichen Lage bezüglich des Polrasters der Permanentmagnete des Sekundärteils vorhanden sein. Gleiche Lage bezüglich des Polrasters bedeutet dabei, daß sich die mechanischen Markierungen z.B. alle genau in der Mitte eines Nordpols des Sekundärteils befinden. Der Vorteil mehrerer Markierungen liegt darin, daß kleinere Abstände gemessen werden müssen und daß man sich eventuell ein Verschieben des Primärteils erspart. Grundsätzlich jedoch ist es nicht von Bedeutung, welche Markierung man zur Ermittlung des Kommutierungsoffsets heranzieht. Genauso, wie wenn nur eine Markierung vorhanden ist, wird zunächst festgestellt, durch externe Berechnung oder automatisch im Ansteuergerät, wieviel ganzzahlige Vielfache der Schrittweite des Polrasters, also dem Abstandes zweier gleichnamiger Pole des Sekundärteils, im gemessenen Abstand enthalten sind. Der Rest ist für die Ermittlung des Kommutierungsoffset maßgebend.

Das Sekundärteil eines elektrischen Synchron-Linearmotors setzt sich üblicherweise aus mehreren Sekundäreinzelteilen zusammen, mit denen je nach Anzahl und Länge der Sekundäreinzelteile verschieden lange Verfahrwege realisiert werden können. Gemäß Anspruch 6 ist vorteilhafterweise jedes der Sekundäreinzelteile mit einer mechanischen Markierung mit derselben Lage zum Polraster versehen.

Besitzt das Sekundärteil gemäß Anspruch 7 eine in Längsrichtung verlaufende Reihe von Befestigungsbohrungen, die bezüglich des Polrasters alle dieselbe Lage haben, so können alle diese Befestigungsbohrungen als mechanische Markierung verwendet werden. Vorzugsweise entspricht der Abstand zwischen den Befestigungsbohrungen der Schrittweite des Polrasters. Die Befestigungsbohrungen einer zweiten in Längsrichtung des Sekundärteils verlaufende Reihe haben zweckmäßigerweise unterschiedliche Abstände voneinander. Die beiden Reihen sind also deutlich voneinander unterscheidbar und erleichtern somit die Zusammensetzung des Sekundärteils aus mehreren Sekundäreinzelteilen. Sobald in einer Reihe nicht alle Befestigungsbohrungen den gleichen Abstand voneinander haben, ist die Zusammensetzung nicht in Ordnung. Die Unterscheidbarkeit der beiden Reihen von Befestigungsbohrungen erleichtet zudem die richtige Zuordnung des Primärteils zum Sekundärteil. Als Orientierungshilfsmittel am Primärteil wird dessen Kabelabgang vorteilhafterweise seitlich angebracht.

Wegen des Höhenversatzes zwischen dem Sekundärteil und dem Primärteil ist es unter Umständen nicht so günstig, wenn die mechanische Markierung am Sekundärteil selbst zur Messung des Abstandes herangezogen wird. Günstiger kann es gemäß Anspruch 10 sein, eine Referenzvorrichtung zu verwenden, die am Sekundärteil in einem bekannten Bezug zum Polraster der Permanentmagnete anordenbar ist und die eine Markierung aufweist, deren Abstand vom Primärteil bestimmt werden kann. Als Markierung dient zweckmäßigerweise eine senkrecht zur Längsrichtung des Sekundärteils laufende Kante an einer Seitenfläche der Referenzvorrichtung. Alle vorhandenen Sekundärteile sind bzgl. der Polanordnung identisch zueinander aufgebaut. Die Einzellängen der Sekundäreinzelteile können unterschiedlich sein. Wesentliches Merkmal ist, daß in Längsrichtung der Sekundärteile fortschreitend jedem Nordpol ein Südpol und umgekehrt folgt.

Ein Ausführungsbeispiel des erfindungsgemäßen elektrischen Synchron-Linearmotors ist in den Zeichnungen dargestellt. Anhand der Figuren dieser Zeichnungen wird die Erfindung nun näher erläutert.

Es zeigen
- Figur 1: eine perspektivische Ansicht des Ausführungsbeispiels,
- Figur 2: eine Draufsicht auf das Ausführungsbeispiel mit auf dem Sekundärteil angeordneter mechanischer Referenzvorrichtung,
- Figur 3: einen Querschnitt durch Primärteil und Sekundärteil, wobei der Abstand zwischen den beiden Teilen vergrößert ist,
- Figur 4: in einem vergrößerten Maßstab eine Draufsicht auf die bloße mechanische Referenzvorrichtung aus Figur 2 und
- Figur 5: einen Schnitt entlang der Linie V-V aus Figur 4.

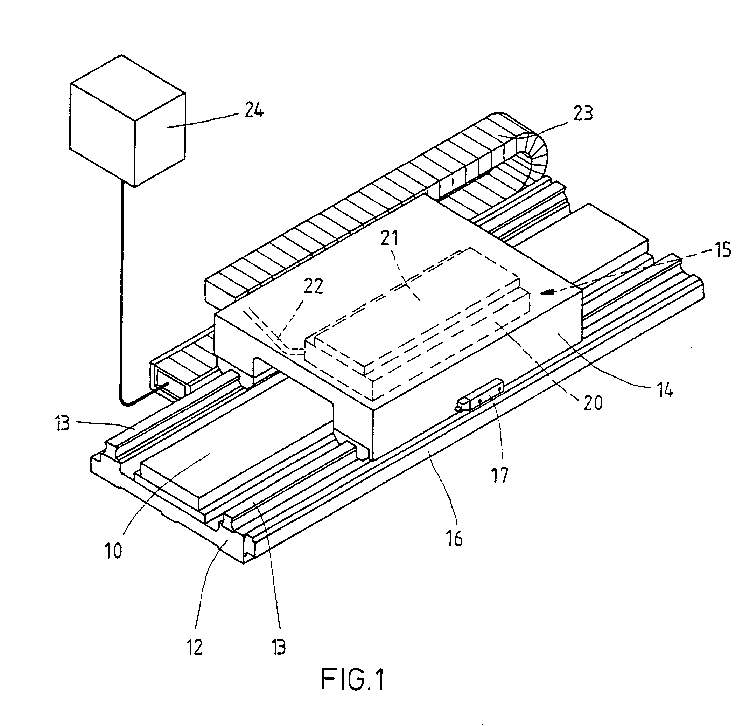

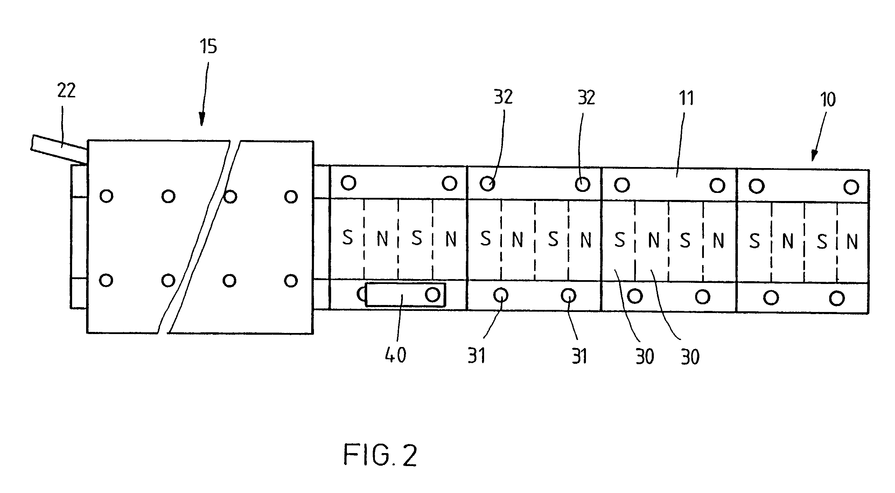

Aus Figur 1 ist die Anordnung des elektrischen Synchron-Linearmotors an einer Maschine erkennbar. Das Sekundärteil 10, das sich, wie in Figur 2 dargestellt, aus mehreren zueinander identischen Sekundäreinzelteilen 11 zusammensetzt, ist in einem Maschinenbett 12 zwischen zwei Führungsschienen 13 befestigt. Auf diesen ist ein brückenartiger Maschinenschlitten 14 geführt, der an seiner dem Sekundärteil 10 des Linearmotors zugewandten Unterseite das Primärteil 15 trägt. Am Maschinenbett ist ein sich in Längsrichtung der Führungsschienen 13 und des Sekundärteils 10 des Linearmotors erstreckender Absolutmaßstab 16 eines Absolutwegmeßsystems befestigt. Der dazugehörige Wegaufnehmer 17 befindet sich am Maschinenschlitten 14. Das Prinzip des Wegaufnehmers kann auch in umgekehrter Anordnung erfolgen, d.h. der Maßstab bewegt sich und der Abtastkopf ist fest mit dem stillstehenden Teil verbunden.

Das Primärteil 15 umfaßt einen Block 20, in dem in nicht näher dargestellter Weise elektrische Spulen und Leitungen untergebracht sind. Auf den Block aufgesetzt ist eine Kühlplatte 21. Ein Kabel 22 tritt seitlich an einer in Richtung der Längserstreckung des Linearmotors weisenden Stirnfläche des Primärteils 15 aus diesem heraus und führt durch einen flexiblen Kabelkanal 23 hindurch zu einem Motorsteuergerät 24.

Alle vorhandenen Sekundäreinzelteile 11 sind bezüglich der Magnetpolanordnung identisch zueinandner aufgebaut und weisen jeweils vier Permanentmagnete 30 auf. In Längsrichtung des Sekundärteils fortschreitend folgt jeweils ein Nordpol einem Südpol und umgekehrt. Die Schrittweite des Polrasters, d.h. der Abstand zwischen zwei gleichnamigen Polen, ist gleich der halben Länge eines Sekundäreinzelteils 11. Zu beiden Seiten der Permanentmagnete 30 besitzt jedes Sekundäreinzelteil 11 zwei Befestigungsbohrungen 31 bzw. 32, die sich in einem Träger 33 für die Permanentmagnete 30 befinden. Der Abstand der beiden Befestigungsbohrungen 31 auf der einen Seite entspricht der Schrittweite des Polrasters. Außerdem hat jede der beiden Befestigungsbohrungen 31 von der benachbarten Stirnseite des Sekundäreinzelteils einen Abstand, der gleich der halben Schrittweite des Polrasters ist. Somit ergibt sich, wenn man die Sekundäreinzelteile 11 so montiert, daß sich die Befestigungsbohrungen 31 alle auf derselben Seite befinden, eine Reihe von Befestigungsbohrungen, die alle den gleichen Abstand voneinander haben. Auch ist die relative Lage aller Befestigungsbohrungen 31 bezüglich des Polrasters gleich. Jede Befestigungsbohrung 31 befindet sich, in Längsrichtung des Sekundärteils 10 betrachtet, genau zwischen einem Südpol und einem sich jeweils auf derselben Seite dieses Südpols befindlichen Nordpol.

Auch die Befestigungsbohrungen 32 auf der anderen Seite eines Sekundäreinzelteils 11 haben jeweils den gleichen Abstand von der benachbarten Stirnseite. Dieser Abstand ist jedoch kleiner als die halbe Schrittweite eines Polrasters, so daß entsprechend der Abstand zwischen zwei Befestigungsbohrungen 32 eines Sekundäreinzelteils 11 größer als die Schrittweite des Polrasters ist. Auf der einen Seite des Sekundärteils 10 ergibt sich also eine Reihe von Befestigungsbohrungen, in der abwechselnd der Abstand zwischen zwei Befestigungsbohrungen jeweils größer oder kleiner ist. Die unterschiedliche Anordnung der Befestigungsbohrungen zu beiden Seiten eines Sekundäreinzelteils 11 erleichtert somit die richtige Zusammensetzung der Sekundäreinzelteile 11 zu einem langen Sekundärteil. Auf der einen Seite muß sich eine Reihe von Befestigungsbohrungen ergeben, in der zwei aufeinanderfolgende Befestigungsbohrungen jeweils den gleichen Abstand voneinander haben. Auf der anderen Seite sind die Abstände zwischen aufeinanderfolgenden Befestigungsbohrungen abwechselnd größer oder kleiner.

Das Primärteil 15 wird so bezüglich des Sekundärteils 10 angeordnet, daß das Kabel 22 auf seiten der Befestigungsbohrungen 32 abgeht.

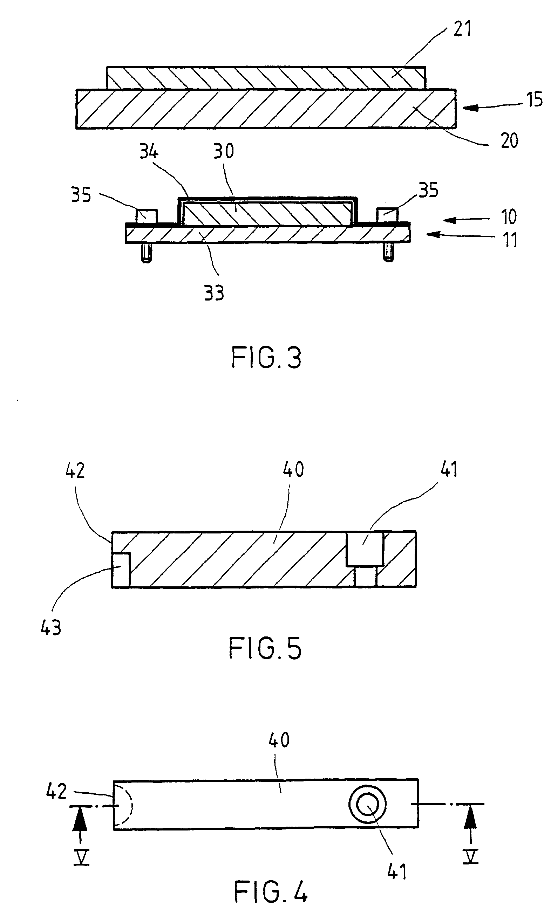

Die Permanentmagnete 30 sind mit einem Abdeckblech 34 abgedeckt, das in Figur 3 erkennbar ist und das mit denselben Schrauben 35 am Träger 33 befestigt ist, die durch die Befestigungsbohrungen 31 und 32 hindurchgesteckt sind und die Sekundäreinzelteile 11 im Maschinenbett 12 fixieren.

Jede der Befestigungsbohrungen 31 ist als mechanische Markierung benutzbar, mit deren Hilfe der Kommutierungsoffset des Primärteils bezüglich des Sekundärteils bei Inbetriebnahme des Linearmotors ermittelt werden kann. Es ist dazu der Abstand zwischen der Achse einer Befestigungsbohrung 31 und der Stirnseite des Primärteils 15, die keinen Kabelausgang aufweist, zu bestimmen. Dies kann an sich mit Hilfe eines Maßstabs ohne weitere Hilfsmittel geschehen. Auch wenn für die Abstandsmessung keine allzu hohe Meßgenauigkeit gefordert wird, kann es wegen des Höhenversatzes zwischen einer Befestigungsbohrung 31 und dem Primärteil 15 schwierig sein, den Abstand genügend genau zu ermitteln. Deshalb wird vorteilhafterweise eine Referenzvorrichtung 40 benutzt, die in einer festen Position bezüglich der Bohrungen 31 am Sekundärteil 10 festlegbar ist. Die Referenzeinrichtung 40 ist ein längliches Profil z.B. aus Aluminium, das eine durchgehende Stufenbohrung 41 besitzt. Diese wird zur Befestigung der Referenzvorrichtung 40 am Sekundärteil 10 in Flucht mit einer Befestigungsbohrung 31 gebracht, in der sich noch keine Befestigungsschraube 35 befindet oder aus der die Befestigungsschraube 35 herausgedreht worden ist. Dann wird eine Schraube 35 durch die Stufenbohrung 41 und die Befestigungsbohrung 31 hindurchgesteckt und in eine Gewindebohrung des Maschinenbetts eingeschraubt. Die Referenzvorrichtung 40 reicht bis zur Achse einer benachbarten Befestigungsbohrung 31, die in einer senkrecht zur Längsrichtung des Sekundärteils 10 verlaufenden Stirnfläche 42 der Referenzvorrichtung 40 liegt. In einer Ausnehmung 43 an der Stirnfläche 42 kann der Kopf einer sich in der benachbarten Befestigungsbohrung befindlichen Schraube 35 aufgenommen werden. Der Abstand der Stirnfläche 42 vom Primärteil 10 entspricht dem Abstand der entsprechenden Befestigungsbohrung 31.

Um bei der Inbetriebnahme des Synchron-Linearmotors den Kommutierungsoffset zu ermitteln, wird also der Abstand zwischen der Stirnfläche 42 der Referenzvorrichtung 40 und der zugewandten Stirnfläche des Primärteils 15 gemessen. Während der Messung bis zur nachfolgenden Eingabe der Meßwerte muß das Primärteil seine Lage bezüglich des Sekundärteils sicher beibehalten. Der gemessene Abstand wird in das Motorsteuergerät eingegeben, das aus der gespeicherten relativen Lage der Befestigungsbohrungen 31 zu den Permanentmagneten 30 den Kommutierungsoffset errechnet. Dabei wird nur ein solcher Rest des Abstandes berücksichtigt, der sich ergibt, wenn man zuvor die Schrittweite des Polrasters so oft wie möglich abzieht. Außer zum Sekundärteil 10 wird auch die Lage des Primärteils 15 zum Wegmeßsystem in Bezug gesetzt. Die Motorsteuerung weiß nun wie in einer bestimmten, vom Wegmeßsystem erfaßten Position des Primärteiles 15 dieses anzusteuern ist.

## Patentansprüche

1. Elektrischer Synchron-Linearmotor mit einem Sekundärteil (10), das mehrere, in einem bestimmten Polraster angeordnete Permanentmagnete (30) aufweist, und mit einem Primärteil (15), das relativ zum Sekundärteil (10) verfahrbar ist und dessen Position relativ zum Sekundärteil (10) durch ein Wegmeßsystem (16, 17) erfaßbar ist, **gekennzeichnet** durch eine am Sekundärteil (10) befindliche mechanische Markierung (31) mit einem bekannten Bezug zum Polraster der Permanentmagnete.

2. Elektrischer Synchron-Linearmotor nach Anspruch 1, **gekennzeichnet** durch ein elektrisches Motorsteuergerät (24), in dem der Bezug der mechanischen Markierung (31) zum Polraster der Permanentmagnete (30) nichtflüchtig gespeichert ist.

3. Elekrischer Synchron-Linearmotor nach Anspruch 1 oder 2, **gekennzeichnet** durch ein Absolutwegmeßsystem (16, 17) zur Erfassung der Position des Primärteils (15) relativ zum Sekundärteil (10).

4. Elektrischer Synchron-Linearmotor nach einem der Ansprüche 1 bis 3, **dadurch gekennzeichnet**, daß als mechanische Markierung direkt oder indirekt eine Befestigungsbohrung (31) des Sekundärteils (10) dient.

5. Elekrischer Synchron-Linearmotor nach einem der Ansprüche 1 bis 4, **dadurch gekennzeichnet,** daß mehrere mechanische Markierungen (31) mit gleichen Lagen bezüglich des Polrasters der Permanentmagnete (30) des Sekundärteils (10) vorhanden sind.

6. Elektrischer Synchron-Linearmotor nach Anspruch 5, **dadurch gekennzeichnet,** daß sich das Sekundärteil (10) aus mehreren vorzugsweise gleichartigen Sekundäreinzelteilen (11) zusammensetzt, von denen jedes eine mechanische Markierung (31) mit derselben Lage zum Polraster der Permanentmagnete (30) aufweist.

7. Elektrischer Synchron-Linearmotor nach einem vorhergehenden Anspruch, **gekennzeichnet** durch eine in Längsrichtung des Sekundärteils (10) verlaufende Reihe von Befestigungsbohrungen (31) am Sekundärteil (10), die bezüglich des Polrasters alle dieselbe Lage haben und deren Abstand voneinander vorzugsweise der Schrittweite des Polrasters entspricht.

8. Elektrischer Synchron-Linearmotor nach Anspruch 7, **gekennzeichnet** durch eine zweite in Längsrichtung des Sekundärteils (10) verlaufende Reihe von Befestigungsbohrungen (32), die unterschiedliche Abstände voneinander haben.

9. Elektrischer Synchron-Linearmotor nach den Ansprüchen 7 und 8, **gekennzeichnet** durch einen seitlichen Abgang eines Kabels (22) am Primärteil.

10. Elektrischer Synchron-Linearmotor nach einem vorhergehenden Anspruch, **gekennzeichnet** durch eine am Sekundärteil (10) in einem bekannten Bezug zum Polraster der Permanentmagnete (30) anordenbare mechanische Referenzvorrichtung (40), die eine Markierung (42) aufweist, deren Abstand vom Primärteil (15) bestimmbar ist.

11. Elektrischer Synchron-Linearmotor nach Anspruch 10, **dadurch gekennzeichnet,** daß eine senkrecht zur Längsrichtung des Sekundärteils (10) verlaufende Kante an einer Seitenfläche (42) der Referenzvorrichtung (40) als Markierung dient.

12. Elektrischer Synchron-Linearmotor nach Anspruch 10 oder 11, **dadurch gekennzeichnet,** daß die Referenzvorrichtung (40) in einem festen Bezug zu Befestigungsbohrungen (31) des Sekundärteils (10) und unter Benutzung wenigstens einer Befestigungsbohrung (31) des Sekundärteils (10) anordenbar ist.

13. Verfahren zur Ermittlung des Kommutierungsoffsets bei einem Linearantrieb mit einem elektrischen Synchron-Linearmotor mit den Merkmalen aus einem der Ansprüche 1 bis 12, **dadurch gekennzeichnet,** daß der Abstand zwischen der am Sekundärteil (10) befindlichen mechanischen Markierung (31) und einer vordefinierten Stelle am Primärteil (15) ermittelt wird, daß der ermittelte Abstand in ein Motorsteuergerät (24) eingegeben wird bzw. automatisch eingelesen wird und daß aus der Lage der Markierung (31) zum Polraster und dem ermittelten Abstand der Markierung (31) von der vordefinierten Stelle am Primärteil (15) der Kommutierungsoffset im Motorsteuergerät (24) errechnet wird.

## Claims

1. Synchronous linear electric motor with a secondary part (10) that has several permanent magnets (30) arranged in a certain pole grid and with a primary part (15) that can move relative to secondary part (10) and whose position relative to secondary part (10) can be detected by a travel measurement system (16, 17), **characterized by** a mechanical marking (31) located on the secondary part (10) with a known relationship to the pole grid of the permanent magnets.

2. Synchronous linear electric motor according to Claim 1 **characterized by** an electrical motor control device (24) in which the relationship of the mechanical marking (31) to the pole grid of the permanent magnets (30) is stored in a nonvolatile manner.

3. Synchronous linear electric motor according to Claim 1 or 2 **characterized by** an absolute travel measurement system (16, 17) for detecting the position of the primary part (15) relative to the secondary part (10).

4. Synchronous linear electric motor according to one of Claims 1 to 3 **characterized in** that a mounting bore (31) in the secondary part (10) serves directly or indirectly as a mechanical marking.

5. Synchronous linear electric motor according to one of Claims 1 to 4 **characterized in** that several mechanical markings (31) are provided that have the same positions relative to the pole grid of the permanent magnets (30) of the secondary part (10).

6. Synchronous linear electric motor according Claim 5 **characterized in** that the secondary part (10) is composed of several preferably identical secondary individual parts (11) each of which has a mechanical marking (31) with the same position relative to the pole grid of the permanent magnets (30).

7. Synchronous linear electric motor according to a foregoing claim, **characterized by** a row of mounting bores (31) on the secondary part (10) that extend in the lengthwise direction of the secondary part (10), said bores all having the same position relative to the pole grid and being located apart from one another at a distance that preferably corresponds to the step width of the pole grid.

8. Synchronous linear electric motor according to Claim 7 **characterized by** a second row of mounting bores (32) running in the lengthwise direction of the secondary part (10), said bores (32) being located at different distances from one another.

9. Synchronous linear electric motor according to Claims 7 and 8 **characterized by** a lateral outlet for a cable (22) on the primary part.

10. Synchronous linear electric motor according to a foregoing claim **characterized by** a mechanical reference device (40) that can be located in a known relationship to the pole grid of the permanent magnets (30), said device having a marking (42) whose distance from the primary part (15) can be determined.

11. Synchronous linear electric motor according to Claim 10 **characterized in** that an edge of a lateral surface (42) of the reference device (40) that extends perpendicularly to the lengthwise direction of the secondary part (10) serves as a marking.

12. Synchronous linear electric motor according to Claim 10 or 11 **characterized in** that the reference device (40) can be placed in a fixed relationship to the mounting bores (31) of the secondary part (10) by using at least one mounting bore (31) of the secondary part (10).

13. Method for determining the commutation offset in a linear drive with a synchronous linear electric motor with the features of one of Claims 1 to 12, **characterized in** that the distance between the mechanical marking (31) placed on the secondary part (10) and a predefined point on the primary part (15) is determined, in that the distance thus determined is entered into a motor control device (24) or is read in automatically, and in that the commutation offset in the motor control device (24) is calculated from the position of the marking (31) relative to the pole grid and the distance of the marking (31) from the predefined point on the primary part (15).

## Revendications

1. Un moteur électrique synchrone linéaire doté d'un élément (10) secondaire, qui présente plusieurs aimants (30) permanents disposés pour former une grille de pôles déterminée, et doté d'un élément (15) primaire, qui peut être amené à bouger par rapport à l'élément (10) secondaire et dont la position relative par rapport à l'élément (10) secondaire peut être saisie à l'aide d'un système (16, 17) de capteur de position, **caractérisé** par une marque (31) mécanique localisée sur l'élément (10) secondaire dans une relation connue avec la grille de pôles d'aimants permanents.

2. Un moteur électrique synchrone linéaire en conformité avec la revendication n°1, **caractérisé** par un appareil (24) de commande électrique du moteur, dans lequel la relation de la marque (31) mécanique avec la grille de pôles d'aimants (30) permanents est enregistrée de façon non volatile.

3. Un moteur électrique synchrone linéaire en conformité avec la revendication n°1 ou n°2, **caractérisé** par un système (16, 17) de capteur de position absolue pour la saisie de la position de l'élément (15) primaire par rapport à l'élément (10) secondaire.

4. Un moteur électrique synchrone linéaire en conformité avec une des revendications n°1 à n°3, **caractérisé en ce que** un forage (31) de fixation de l'élément (10) secondaire sert directement ou indirectement de marque mécanique.

5. Un moteur électrique synchrone linéaire en conformité avec une des revendications n°1 à n°4, **caractérisé en ce que** plusieurs marques (31) mécaniques sont disposées dans une même position par rapport à la grille de pôles d'aimants (30) permanents de l'élément (10) secondaire.

6. Un moteur électrique synchrone linéaire en conformité avec la revendication n°5, **caractérisé en ce que** l'élément (10) secondaire est composé de plusieurs sections (11) d'élément secondaire, de préférence similaires, desquelles chacune possède une marque (31) mécanique dans la même position par rapport à la grille de pôles d'aimants (30) permanents.

7. Un moteur électrique synchrone linéaire en conformité avec une revendication précédente, **caractérisé** par des forages (31) de fixation au niveau de l'élément (10) secondaire, disposés en une série dans la direction de la longueur de l'élément (10) secondaire, qui tous ont la même position par rapport à la grille de pôles et dont la distance les uns par rapport aux autres de préférence correspond à la périodicité de la grille de pôles.

8. Un moteur électrique synchrone linéaire en conformité avec la revendication n° 7, **caractérisé** par des forages (32) de fixation, disposés en une seconde série dans la direction de la longueur de l'élément (10) secondaire, dont les distances les uns par rapport aux autres sont différentes.

9. Un moteur électrique synchrone linéaire en conformité avec les revendications n° 7 et n° 8, **caractérisé** par une sortie latérale d'un câble (22) au niveau de l'élément primaire.

10. Un moteur électrique synchrone linéaire en conformité avec une des revendications précédentes, **caractérisé** par un dispositif (40) de référence mécanique, qui peut être disposé au niveau de l'élément (10) secondaire dans une relation connue par rapport à la grille de pôles d'aimants (30) permanents et qui présente une marque (42), dont la distance par rapport à l'élément (15) primaire peut être déterminée.

11. Un moteur électrique synchrone linéaire en conformité avec la revendication n° 10, **caractérisé en ce que** une arête, qui est disposée perpendiculairement à la direction de la longueur de l'élément (10) secondaire, sert de marque au niveau d'une surface (42) latérale du dispositif (40) de référence.

12. Un moteur électrique synchrone linéaire en conformité avec la revendication n° 10 ou n° 11, **caractérisé en ce que** le dispositif (40) de référence peut être disposé dans une relation fixe par rapport à des forages (31) de fixation de l'élément (10) secondaire et par utilisation d'au moins un forage (31) de fixation de l'élément (10) secondaire.

13. Un dispositif destiné à la détermination de l'offset de commutation pour un entraînement linéaire pourvu d'un moteur électrique synchrone linéaire doté des caractéristiques d'une des revendications n° 1 à n° 12, **caractérisé en ce que** la distance entre la marque (31) mécanique localisée au niveau de l'élément (10) secondaire et un emplacement prédéfini au niveau de l'élément (15) primaire est déterminée, que la distance déterminée est entrée dans un appareil (24) de pilotage du moteur ou, le cas échéant, lue de façon automatique et que l'offset de commutation est calculé dans l'appareil (24) de pilotage du moteur à partir de la position de la marque (31) par rapport à la grille de pôles et de la distance déterminée de la marque (31) par rapport à l'emplacement prédéfini au niveau de l'élément (15) primaire.
